Europäisches Patentamt

European Patent Office

Office européen des brevets

(19)

(11) Publication number: **0 152 996**
A2

# (12) EUROPEAN PATENT APPLICATION

(21) Application number: **85300045.3**

(22) Date of filing: **04.01.85**

(51) Int. Cl.⁴: **G 02 F 1/03**

(30) Priority: **10.01.84 GB 8400484**

(43) Date of publication of application: **28.08.85**
**Bulletin 85/35**

(84) Designated Contracting States: **AT BE CH DE FR IT LI LU NL SE**

(71) Applicant: **The General Electric Company, p.l.c., 1 Stanhope Gate, London W1A 1EH (GB)**

(72) Inventor: **Parsons, Nicholas John, 4 Upper Bridge Road, Chelmsford Essex (GB)**
Inventor: **Owen, Martin Phillip, 1, Baddow Place Avenue, Great Baddow Chelmsford Essex (GB)**

(74) Representative: **Hoste, Colin Francis, The General Electric Company p.l.c. Central Patent Department (Chelmsford Office) Marconi Research Centre West Hanningfield Road, Great Baddow Chelmsford CM2 8HN, Essex (GB)**

(54) **Velocity matching apparatus.**

(57) Velocity matching between optical signals transmitted along a light guide (13) on a lithium niobate substrate (12) and microwave signals along transmission line electrodes (16 and 17) may be improved by positioning layers of dielectric material (14 and 15) between the substrate (12) and the electrodes (16 and 17). By improving the velocity matching the bandwidth of the device may be increased.

EP 0 152 996 A2

1

VELOCITY MATCHING APPARATUS

This invention relates to velocity matching apparatus.

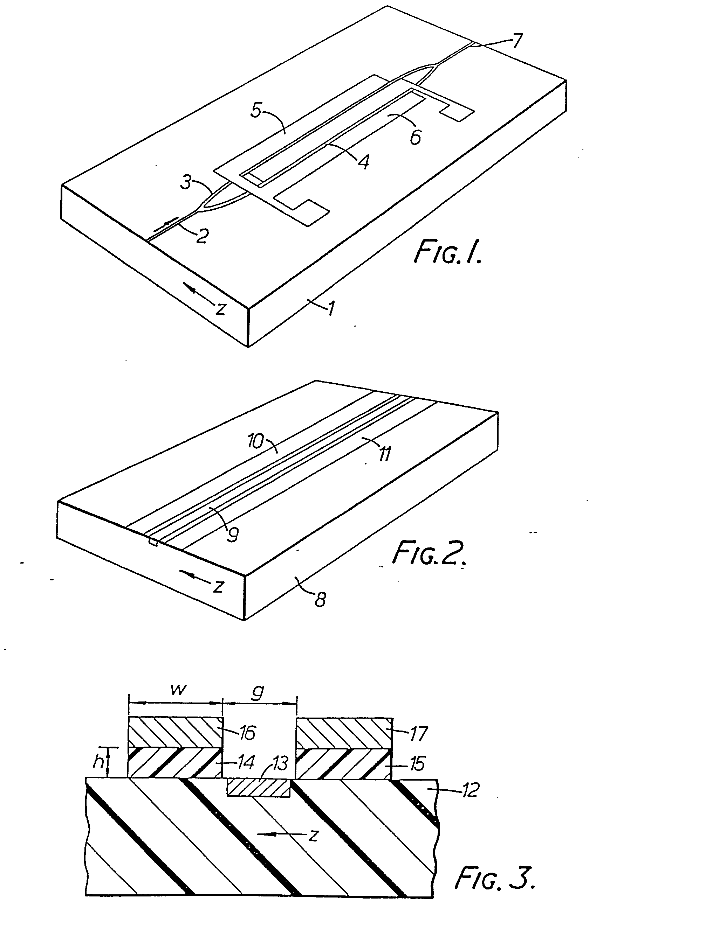

Apparatus which employs electro-optical techniques to modulate a light beam with radio frequency (r.f.) signals (or microwaves) has limitations in bandwidth or modulation speed imposed by the electrodes used. A conventional Mach-Zehnder modulator which experiences these problems is shown in Figure 1. In comprises an electro-optical substrate 1 of lithium niobate on which is disposed a light guide 2 having a branched section consisting of two arms 3 and 4. Two sets of interdigitated electrodes 5 and 6 are arranged parallel to the two arms 3 and 4 such that each arm is adjacent to an electrode from one set on one side and one from the other set on the other side. In operation, light is transmitted along the light guide 2, in the direction shown by the arrow, and divides equally between the two arms 3 and 4. An electrical potential difference is applied across the two arms 3 and 4 in opposite directions by means of the electrodes 5 and 6. The refractive indices of the arms 3 and 4 are altered according to the electric field applied across them, because of the elelectro-optical properties of the substrate 1, and are increased for one arm and reduced for the other. After passing along the arms 3 and 4 the light is recombined on to a single light guide 7. Since the light has travelled at different speeds along the arms 3 and 4, when it is recombined there is a phase difference between light derived from one arm and that derived from the other. By altering the potential differences across the arms 3 and 4 the phase at the light guide 7 may be controlled and hence so may the amplitude of the light, permitting amplitude modulation.

However, the modulation speed of the device is limited by the capacitance of the electrodes 5 and 6 and the time taken for light to travel along the arms 3 and 4. The transit time of light through the device limits the bandwidth, since when the potential differences are changed, light already travelling along the arms 3 and 4 is also affected by the electric field previously applied.

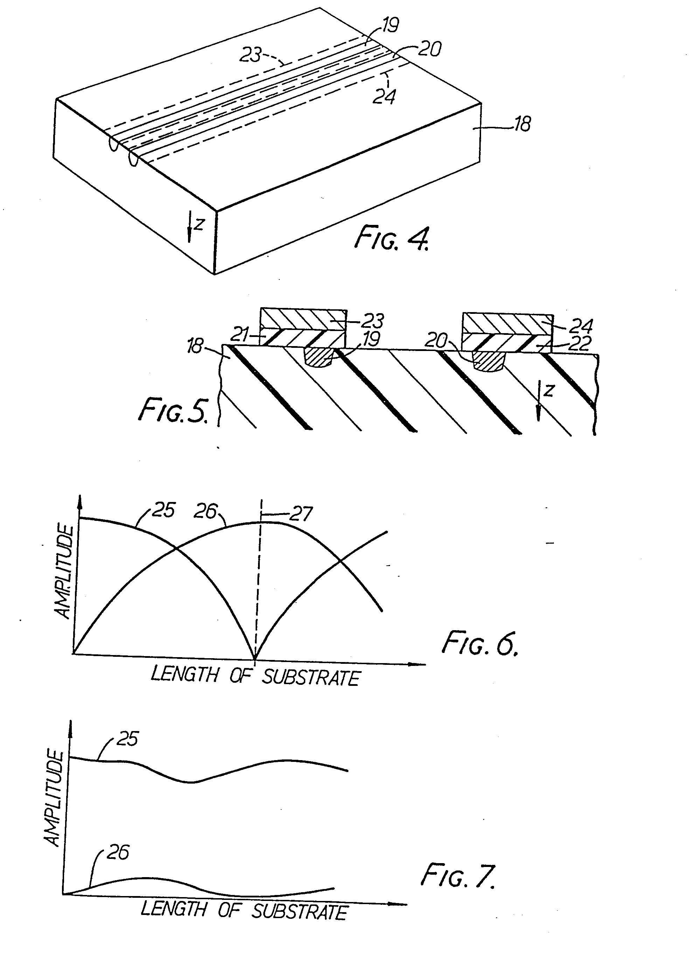

A travelling-wave structure has been developed to reduce these problems and increase the bandwidth. In this structure, electrodes are employed as transmission lines so that the microwave signals controlling the potential difference across a light guide travel alongside optical signals transmitted along the guide in an attempt to match the velocity of the microwave signals with that of the light. A lithium niobate substrate 8 has an optical guide 9 of titanium diffused into its surface (shown in Figure 2). Transmission lines electrodes 10 and 11 which act as waveguides are also laid down on either side of the guide 9. Microwave signals are transmitted along the electrodes 10 and 11 in the same direction as the light travelling along the optical guide 9. The bandwidth is increased over that of the first described device of Figure 1, because the velocity of the microwaves reduces the effective transit time of light through the device, this being determined by the difference in transit time between the microwave and optical signals.

However, although the use of transmission line electrodes results in an increase in the bandwidth of the device, there is still a velocity mismatch.

It is an object of this invention to provide apparatus having improved velocity matching.

According to a first aspect of this invention there is provided velocity matching apparatus comprising an optical guide disposed on an electro-optic substrate; an electrical waveguide comprising a transmission line electrode and dielectric material, the dielectric material being positioned between the electrode and the substrate, one of its surfaces being adjacent the electrode and another being adjacent the substrate, the dielectric material having dimensions and a dielectric constant such that in operation the velocity of electrical signals carried by the transmission line electrode approaches the velocity of light carried by the optical guide.

According to a second aspect of this invention there is provided an optical switch apparatus for switching light from a first optical guide to a second optical guide comprising: an electro-optic substrate on which the first and second guides are disposed substantially parallel to each other; an electrical waveguide structure comprising two transmission line electrodes, arranged such that in operation an electric field can be set up across at least one of the guides, and dielectric material positioned between the electrodes and the substrate; the dielectric material having dimensions and a dielectric constant such that in operation the velocity of electric signals carried by the transmission line electrodes may be made to approach the velocity of light carried by the optical guides.

Electro-optic substances permit interaction between optical and electrical signals. An electrical potential applied across such a substance causes the refractive index of the substance for optical signals to alter, the amount of change depending upon the magnitude of the applied potential.

The dielectric material distances the transmission line electrode from the substrate. The use of such a material may be thought of as placing a capacitance in series with the capacitance of the electrodes. Thus by introducing the dielectric material, the overall capacitance of the electrode waveguide is reduced, since the reciprocals of capacitances in series are summed to determine the reciprocal of the resultant value.

By reducing the overall capacitance, the velocity of microwaves transmitted along the electrodes is increased and the velocity mismatch is reduced. To maximise the overlap between electrical and optical fields, the dimensions of the electrodes must be of the same order

4

as those of the optical guide. To reduce ohmic losses, the electrodes should be wide, and a certain width-to-gap ratio must be maintained to obtain a desired characteristic impedance.

Preferably the dielectric material has a thickness which ensures that the velocity of the electrical signals is increased to substantially the velocity of light in the guide. However, a useful degree of velocity matching, and hence increase in the bandwidth, may be obtained by using a dielectric layer which produces at least a 10% increase in the velocity of the electrical signals where initially the velocity of light in the guide is twice as great as that of the electrical signals. This increase of 10% ensures that the velocity of the electrical signals sufficiently approaches that of the light.

It may be thought that the use of such a dielectric layer, although increasing the bandwidth, would also give a loss in efficiency, since the introduction of the dielectric material results in the electrodes being spaced further from the optical guide, and hence the electric field across it is reduced. For example, for an original velocity mismatch where the velocity of light is twice as fast as the microwave velocity, the overall capacitance must be reduced by a factor of four to match the velocities, and, for the same electrode and drive voltage, the electric field strength is also reduced by the same amount. However, two factors enable this loss of efficiency to be compensated. The first is that by reducing the capacitance, the characteristic impedance of the electrode is increased. Thus, for a given power, the device is more efficient than previously, because of the increase in voltage.

Secondly, the width of the electric field increases with distance from the electrodes. Hence, when a dielectric layer is employed, the width of the electric field is

5

larger at the optical guide than when such a layer is not used.  Thus it is possible to reduce the gap between the electrodes to compensate for the reduced overlap between the electrical field and the interior of the optical guide, and, because of the reduction in the gap, obtain a corresponding increase in field strength.  The electrodes and dielectric material between them and the substrate may overlap the optical guide.  Thus the efficiency of a velocity matched device employing the invention may be made to approach that of one not using a dielectric material.

The invention is now further described by way of example, with reference to Figures 3 to 7 of the accompanying drawings, in which:

Figure 3 is a transverse section of part of an electro-optic modulator in accordance with the invention;

Figure 4 is a  perspective view of another device in accordance with the invention;

Figure 5 is a transverse section of the device of Figure 4; and

Figures 6 and 7 are explanatory diagrams relating to the operation of the device of Figures 4 and 5.

With reference to Figure 3, an electro-optic modulator, such as a Mach-Zehnder interferometer, comprises an electro-optic substrate 12 of lithium niobate with its z-direction as shown and having an optical guide 13 formed on it by the diffusion of titanium on to its surface. Strips of dielectric material 14 and 15 are arranged parallel to the optical guide 13 on the surface of the substrate 13. Transmission line electrodes 16 and 17 are positioned on the top surfaces of the strips of dielectric material 14 and 15, and in operation, carry microwave signals which control the refractive index of the guide 13.  The transmission line electrodes 16 and 17 have a width $w$ and are separated by a gap g. The thickness of the dielectric material strips 14 and 15 is denoted by h. Suitable values for w, g and h are approximately 15μm, 4μm and 1.6μm respectively, for a dielectric material having a relative permittivity of 3.5. The thickness of the transmission line electrodes 16 and 17 is about 1μm.

It is believed that a device employing the invention could have a bandwidth of up to 100 GHz and possibly even higher. Some substances which are suitable for use as dielectric materials are polymide, silicon dioxide and silicon nitride having relative permittivities of 3.5, 3.8 and 7.8 respectively. Lithium niobate has an effective relative permittivity of about 35.

Referring to Figures 4 and 5, the invention may be advantageously employed in other guided-wave structures, such as for example, an optical switch. A lithium niobate substrate 18, with its z-direction as shown, has first and second optical guides 19 and 20 disposed on its upper surface parallel to each other and closely spaced together. Typically, the guides 19 and 20 are about 12 μm wide and are separated by 3μm. Layers 21 and 22 of dielectric material are located on the guides 19 and 20, and transmission line electrodes 23 and 24 on the layers 21 and 22. The positions of the electrodes 23 and 24 are illustrated in Figure 4 by broken lines.

The switch is an optical directional coupler and acts as follows. In operation, light is sent along the first guide 19. If the refractive indices of the first and second guides 19 and 20 are identical, the velocities of light travelling along them will be the same. In this case, all the light on the first guide 19 is transferred to the second guide 20 because of the overlap in the evanescent field of light travelling along the first guide 19 with the second guide 20 and because light on one guide has the same phase as the remainder of the light on the other guide at any position along them.  This effect is repeated and the light, which is now travelling along the second guide 20, is transferred to the first guide 19.  This is illustrated in Figure 6, in which the amplitude of light carried by the first and second guides 19 and 20 against the length of the substrate is shown by lines 25 and 26 respectively.  It can be seen that all the light is carried by the second guide 20 at the position indicated by broken line 27.  This would normally be the length of the interactive region of the substrate 18.

A complete transfer of light from one guide to the other occurs only if the velocities of light carried by the two guides 19 and 20, and hence the phases, are identical.  If there is any difference in the phase of light on one guide from that of the other, only a small amount of light is transferred between them, as illustrated by Figure 7.  Thus by controlling the velocities at which light passes along the guides 19 and 20, light applied on the first guide 19 may be constrained to that guide or switched to the second guide 20.  The velocities are controlled by means of the electro-optic effect.  Voltages are applied across the guide 19 and 20, hence altering their refractive indices, by sending microwave signals along the transmission line electrodes 23 and 24.  As in the device described earlier with reference to Figure 3, the use of layers 21 and 22 of dielectric material increases the maximum switching speed of the device by matching the velocities of light and microwave signals.

8

## Claims

1. Velocity matching apparatus comprising an optical guide disposed on an electro-optic substrate; an electrical waveguide comprising a transmission line electrode and dielectric material; the dielectric material being positioned between the electrode and the substrate, one of its surfaces being adjacent the electrode and another being adjacent the substrate, the dielectric material having dimensions and a dielectric constant such that in operation the velocity of electrical signals carried by the transmission line electrode approaches the velocity of light carried by the optical guide.

2. Apparatus as claimed in claim 1 and wherein the electrical waveguide includes two transmission line electrodes positioned on respective sides of the optical guide, each having dielectric material positioned between it and the substrate.

3. Apparatus as claimed in claim 1 or 2 and wherein the dielectric material has a thickness such that the velocity of the electrical signals is substantially the same as the velocity of light carried by the guide.

4. An electro-optic modulator including apparatus as claimed in claim 1, 2 or 3.

5. Optical switch apparatus for switching light from a first optical guide to a second optical guide comprising: an electro-optic substrate on which the first and second guides are disposed substantially parallel to each other; an electrical waveguide structure comprising two transmission line electrodes, arranged such that in operation an electric field can be set up across at least one of the guides, and dielectric material positioned between the electrodes and the substrate; the dielectric material having dimensions and a dielectric constant such that in operation the velocity of the electrical signals carried by the transmission line electrodes may be made to approach the velocity of light carried by the optical guides.

6.    Apparatus as claimed in claim 5 and wherein the electrodes are positioned above respective guides.

7.    Apparatus as claimed in claim 5 or 6 and wherein the dielectric material has a thickness such that the velocity of the electrical signals is substantially the same as the velocity of light carried by the guides.

8.    Apparatus as claimed in any preceding claim and wherein the dielectric material has the same configuration as the electrode or electrodes.

9.    Apparatus as claimed in any preceding claim and wherein the electro-optic substrate is of lithium niobate.

10.    Apparatus as claimed in any preceding claim and wherein the dielectric material is polymide.

FIG.1.

FIG.2.

FIG.3.

FIG. 4.

FIG. 5.

AMPLITUDE

LENGTH OF SUBSTRATE

FIG. 6.

AMPLITUDE

LENGTH OF SUBSTRATE

FIG. 7.